# EUROPEAN PATENT APPLICATION

(11) **EP 1 782 874 A1**
(43) Date of publication of application: **09.05.2007**
(21) Application number: 06396019.9
(22) Date of filing: 03.11.2006
(51) Int. Cl.: B01D 35/12, B01D 29/62, B01D 39/20, B01D 61/14, B01D 65/02, C02F 1/00

(54) **Method and device for filtering solids containing water suspensions**

(30) Priority: 04.11.2005 FI 20051121
(71) Applicant: Oy Keskuslaboratorio - Centrallaboratorium Ab, 02151 Espoo (FI)
(72) Inventor: Kokkonen, Raimo, 02410 Kirkkonummi (FI); Vanninen, Simo-Pekka, 02430 Masala (FI)
(74) Representative: Sundman, Patrik Christoffer

(57) **Abstract**

The present invention relates to a method and apparatus for filtering solids-containing water suspensions. According to such a method an water suspension is directed into a first ceramic crossflow filter, in which solid material is separated from the water phase of the water suspension for producing a solids-free filtrate during the filtering stage and the filter is regenerated in a washing stage by removing the solid material accumulated on the ceramic filtering material. According to the invention at least a portion of the water suspension is directed into at least one second crossflow filter being used in parallel with the first filter for filtering the water suspension. By means of the invention it is possible to filter high-consistency process waters continuously and delaylessly for up to several weeks.

## Description

The present invention relates to a method for filtering solids-containing water suspensions. According to such a method the water suspension is directed into a ceramic filter, in which the solid materials are separated from the water phase of the water suspension by means of a ceramic filter material for forming a solids-free filtrate during the filtration stage, and the filter is regenerated in a washing stage by removing the solid material attached to the ceramic filtration material.

The invention also relates to an apparatus for carrying out such a method.

In the development of industrial processes acquiring of data about the parameters describing the status of the process is becoming more and more essential for both the development and the adjustment of the processes. Correctly made sampling and filtration are among the most important areas of process measurement. Should they be defective or incorrect, the information produced by the measurement will not be reliable, either. In the acquirement of correct measurement data a continuous and representative sampling is in a central role. In order to measure the chemical parameters of process waters the sample must often be pre-processed. The most important pre-processing procedures are filtration and dilution. There are a number of functioning technical alternatives for real-time dilution. However, for filtration there are no delayless continuous, automatically washable apparatuses that can be flexibly connected to both the process and the measurement device that are additionally inexpensive enough in relation to the requirements. As continuous on-line measurements produce a lot of real-time information about the process, within the industry there is a demand for continuous, automatic filtration systems.

A problem with traditional throughflow filters is their fast clogging when filtering high-consistency pulps. For example, in the paper industry clogging can happen on a time scale of seconds or minutes at best. Because this considerably increases the flow resistance of the filter, fast changes are produced in the yield rate of the filter. It is also known to shape throughflow filters into cup- or candle-like forms for increasing their filtration area and thus their filtration power and for slowing down clogging.

It is also known to connect throughflow filters in parallel, whereby it is possible to regenerate one filter while the other one is filtering. One such throughflow filtration apparatus is shown in FI publication 112780. There, the channels on the secondary side of the filters are connected to buffer spaces that are used for controllably creating and attenuating the flow impulse used in the cleaning of the filters. A somewhat similar apparatus is shown in US publication 6627079. The filters shown in these publications can be used for filtering running and relatively clean liquids, but they can not be used, for example, sampling of high-consistency pulps.

US publication 4341642 discloses a double throughflow candle filter. The liquid to be filtered can be directed from the primary side through the filter material to be further removed via ducts on the secondary side. The apparatus additionally comprises valves arranged in the upper edge of the filtering chamber through which the gases accumulated in the chamber can be removed.

DE publication 1810972 and SU publications 897257 and 856498 also disclose double throughflow filters.

Even the use of a plurality of throughflow filters in parallel as described in the above-referenced publications does not solve the clogging problem associated with high-consistency pulps. Even increasing the frequency of regeneration cycles can not compensate for the abrupt change of the filtrate yield rate caused by clogging. Thus, prior art apparatuses can not be used for continuous filtering from high-consistency pulps.

Ceramic filters can be used in applications of various branches of industry. An example of the use of traditional ceramic throughflow filters is given in the solutions of JP publications 03288502 A and 63274405 A. The former of these utilizes filters for removing impurities from gases, the latter uses filters for cleaning radioactive effluent. Both publications disclose use of compressed air for regenerating the filters.

The operation of ceramic crossflow filters is based on the idea that the liquid to be filtered is fed through flow channels in the filter under pressure caused by the process or created by an external apparatus, such as a transfer pump. Throttling the flow regulation valve located on the outlet side of the filter forces the liquid separated from the solids-containing suspension to flow to the pores of the filter material in a direction perpendicular in relation to the longitudinal channels, the liquid flowing from the pores unidirectionally from the filtrate recovery system to be recovered. A considerable portion of the material to be filtered flows essentially unfiltered along the longitudinal channels back to the process.

As the liquid or gas passes through the pores particles from it are detained by the filter, the quality, size and amount of the particles depending on the properties of the filter used, such as the pore size, material, geometry, the number of channels and the location of the channels.

It is to be noted that the operation principle of the crossflow filter differs essentially from the traditional throughflow filter. In a throughflow filter all liquid contained by the material to be filtered is transported through the filter material, whereby the solid material is caught by the filter material. Thus, the essential difference is that a throughflow filter does not comprise separate filtrate and flow channels so their clogging with high-consistency pulps is extremely fast.

It has been noted that ceramic crossflow filters function better at certain consistency areas than throughflow filters, but in many applications clogging within a certain time is their problem as well. The clogging time depends on the chemical composition of the process solution and the solids content. Especially in the filtration of high-consistency pulps (consistency over 3%) clogging can happen very quickly. For example, in the sampling of paper making process raw material flows containing TMP, cellulose pulp, rejects and fillers the filter can clog already after a few hours' use. In case the samples are directed to the filter with the process pressure, process stoppages will also cause clogging of the filter. Other factors having an effect on the clogging speed are, among others, the flow rate of pulp and the filtration pressure that determine how large a proportion of the water phase and the solids are directed into the pores of the filter and how large a proportion correspondingly continues along the flow channel to the process. Further, during long production phases, as the pores of the filter are filled, the yield speed of the filtrate decreases and its properties change. Thus, performing reliable measurements requires regular and frequent cleaning of filters.

The cleaning of a fully or partially clogged filter can be carried out with water and chemicals or with only water, and in a manual operation it is made at least partly by hand. The cleaning is work-intensive and when using a filtration apparatus having one filter, it will cause a stoppage in the filtration and further in sampling, analysing of samples and thus also in process regulation or monitoring. Additionally, the cleanliness of the filters can vary after a manual washing and thus the repeatability and reliability of the filtration are considerably affected.

The object of the present invention is to eliminate problems associated with clogging and to produce a continuous filtration apparatus for sampling from high-consistency pulps.

In particular, an object of the invention is to eliminate the disadvantages related to prior art and primarily to produce a filtering apparatus being continuous so that it operates continuously for at least a week without a manual cleaning or other service operations when filtering pulp having a consistency of over 3% so that the filtrate yield rate is sufficient for monitoring the process status of the process being controlled, preferably at least 0.006 1/h, generally at least 0.6 1/h and up to a yield rate of 121/h, even up to a yield rate of 30 1/h. By "continuous" is also meant that by means of adjusting the washing stages the apparatus is capable of producing filtrate at a constant rate and without stoppages, typically so that its yield rate changes 20 % at the most, preferably less than 10 % and most suitably less than 5 % during filtration and the filtrate is sufficiently consistent in quality for the analysis apparatuses for the whole operation time of the filtration apparatus.

The invention is based on the fact that filtration is carried out by means of using at least two separate filtering channels both of which comprise a ceramic crossflow filter, of which at least one can be used for filtering and at least one other filter can be simultaneously cleaned or used for filtering in parallel with the first one. At the desired time, usually slightly before the filter currently in use is transferred into cleaning stage, the filtering can be started with the other filter. Thus, by means of the method and apparatus according to the present invention it is possible to monitor the process status continuously, as filtrate can be produced continuously and without delays.

In order to regenerate the filters they can easily be transferred into a cleaning status in which they are washed and/or rinsed. Preferably the cleaning stage comprises at last a water rinsing stage in which the flow channels of the filters are rinsed with a flow of water.

Cleaning of the filters preferably also comprises a back flow washing stage, in which cleaning liquid is directed through the crossflow filter so that its flow though the filter material is in direction essentially different from that of the direction of the pulp to be filtered during filtration. The washing liquid can either be a chemical suitable for the purpose or water. In addition, the flow channels and pores of the filters as well as the filtrate channels can be rinsed with water for removing chemical residues. It has surprisingly been found that with this method the filters can be regenerated so well that even in the filtration of high-consistency pulps the quality of filtrate is good even after tens, even hundreds filtration and washing cycles.

In this case the filtration channels are provided with a water rinsing/back flow washing apparatus, whereby filtration channels can be used for filtering or they can be washed at the desired time independently of each other. By defining filtration and washing stages with the control system so as to alternate and their duration suits the pulp to be filtered, the apparatus can be used for producing good quality filtrate without stoppages in the filtrate flow for continuous, long-time monitoring of the process.

More specifically the invention is characterized by what is disclosed in the characterizing part of claim 1.

On the other hand, the apparatus according to the invention is characterized by what is disclosed in the characterizing part of claim 25.

Considerable technical and economical advantages are achieved by means of the present invention. The invention solves the problem related to continuous sampling of high-consistency pulps by parallel use of crossflow filters. The advantage of crossflow filters over throughflow filters is that clogging is considerably slower, because only a portion of the material to be filtered is directed into the pores of the filter material. Using these in parallel according to the invention continuous filtration of even high-consistency pulps is possible without considerable changes in the filtrate yield rate.

One factor for achieving continuous operation in a preferable way is using ceramic filter material. The advantage is related to the effectiveness of washing of crossflow filters. We have noticed that because the solids are mainly attached to the filter material in the surface of the filter channel, the filter can be effectively cleaned without creating pressure in the filter, i.e. even with only water flow in the flow channels. Thus the filtrate flow in the filtrate channels is not disturbed and the washing stage can be quickly performed. A traditional throughflow filter must always be cleaned by feeding water countercurrently through the pores of the filter material with pressure, which causes a considerable loss in the filtration.

A crossflow filter unit according to the invention can also be placed in any position, because the regeneration can be done by means of water flowing in the flow channels and due to the continuous flow in the flow channels air or other gases do not accumulate into the filter unit in the same measure as in prior art closed filter chambers based on throughflow technology.

The most considerable technical improvement of the parallel filter system over a single filter system is that the filtrate flow is continuous for even weeks without stoppages, which makes continuous sampling and process status control possible. Additionally, the washing intervals of the filters can be kept short and the washing process very standardized, thereby improving the repeatability of the sampling. The durations of filtration and washing stages, pulp flow speed and filtration speed can be chosen to suit the properties of the pulp and the analysis apparatus being used for producing optimal filtrate. The apparatus can also be flexibly connected to various analysers. Further, the properties of the filtrate can be effected by using different ceramic crossflow filters. Thus, for example, the chemical state of the filtrate can be changed according to the requirements of the used analysis apparatus and the process allows sampling from process solutions containing different amounts and different solids. Further, by controlling the filtrate flows from different filtration channels to different targets, filtrate for two measurement apparatuses simultaneously monitoring different parameters can be made from a single sample flow. In a mill test, in which the consistency of the pulp was about 3%, the pulp containing TMP, cellulose, rejects and fillers, it could be shown that a single-channel ceramic filter provided with an automatic counter-current washing system separated solids well from the liquid phase, whereby it is well suited for sampling and pre-processing the dissolved materials of very high-consistency pulp.

The economical advantages of a parallel filter apparatus are also considerable. The costs of automated sampling and analysing the sample are only a fraction of the costs of a laboratory measurement. In addition, the number of service calls to the factory is reduced, because the apparatus is highly automated. A remote monitoring device can also be connected to the automatics, the device sending a message in case the device needs manual service. The mill personnel can also be trained to monitor the operation of the device and to make small device services. This can be seen in mill tests in which a filtering device provided with an automatic counter-current washing system was continuously operated for weeks.

The present apparatus is especially suitable for treating pulp flows of a paper mill, whereby the water suspension contains fibers and possibly filler or pigments. Thus, it can be used for sampling, for example cellulosic pulp, mechanical pulp or a raw material flow containing rejects and/or fillers. Even though the present apparatus and method are especially planned for filtering the above-mentioned high-consistency pulp flows, they can also be used for filtering other industrial and community process flows. They can also be used for pulp flows having very low viscosity, in which the solids content is very small, depending on the type of the filter elements.

In the following, the present invention is described closer in a detailed disclosure of the invention, with reference to the attached drawings, whereby
figure 1 a is a schematic illustration of the first embodiment of a two-channel crossflow filter apparatus,
figure 1b is a schematic illustration of the second embodiment of a two-channel crossflow filter apparatus,
figure 1c is a schematic illustration of the third embodiment of a two-channel crossflow filter apparatus,
figure 1d is a block diagram of the principle of the flow arrangements of figures 1a - 1c,
figure 2a is the program schematic of an embodiment of a two-channel filtering apparatus according to the invention,
figure 2b is the program schematic of a another embodiment of a two-channel filtering apparatus according to the invention.

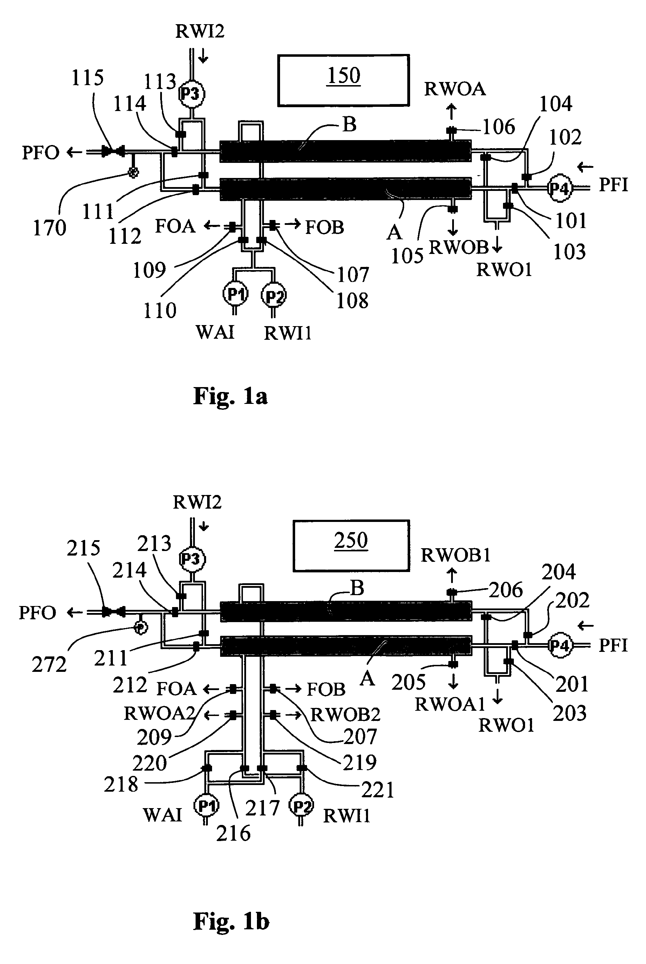

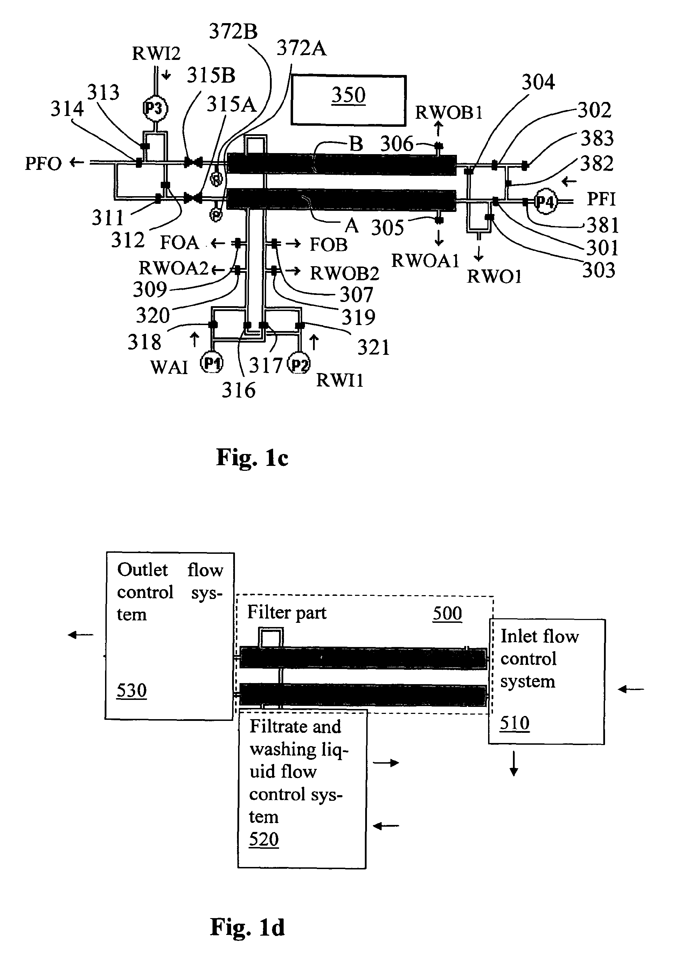

The present invention comprises a method and arrangement for continuously filtering solids-containing water suspensions. The solids-containing water suspension can be, for example, raw material pulp for paper making or other industrial process water. As shown in figures 1a-1c, the primary embodiment comprises two parallel filtering channels A and B that can be made to filter and that can be washed either simultaneously or separately. In alternative embodiments a plurality of such channels can be arranged in parallel, whereby the principles of the following description concentrating on a two-channel solution are applied according to the number of the channels. By filtering channel is meant a block of the apparatus containing at least one crossflow filter at least partly consisting of porous filtering material. A flow channel is formed in the filtering material, into which the water suspension can be introduced and through which the unfiltered pulp flows. The crossflow filter additionally comprises a filtrate channel in connection with the ceramic filter material and through which the water phase can be removed from the filter subsequent to passing through the ceramic filter material.

According to a preferred embodiment cleaning of each crossflow filter is accomplished in the flow channels at least partly by means of water flowing concurrently or, preferably, countercurrently. Thus there is no need to form pressure over the filter material. As solid materials are mostly accumulated on the surface of the flow channels, rinsing with flowing water is sometimes enough for regenerating the filters. In some cases a multi-stage washing is needed, as will later be exemplarily described.

As is shown in figures 1a-1d, the filter system preferably consists of a "pulp flow in" conduit PFI, inlet flow control system 510, filter part 500, filtrate and washing agent flow control system 520, outlet flow control system 530 and "pulp flow out" conduit PFO. The filter part 500 separates the said flow control systems from each other. The inlet flow control system 510 comprises a "rinsing water out" conduit RWO1 preferably connected to the flow channel. Also conduits "rinsing water out A" RWOA and "rinsing water out B" RWOB can be considered to belong in this system. The filtrate and washing agent flow control system 520 preferably comprises a "filtrate out" conduit FOA for the channel A a "filtrate out" conduit FOB for the channel B , the first "rinsing water in" conduit RWI1 and the "washing agent in" conduit WAI. The flow control system 530 on the outlet side preferably comprises a second "rinsing water in" conduit RWI2.

The inlet flow control system 510 controls the pulp flow to either or both of the flow channels depending on the desired filtering mode and further depending on the valve settings chosen on the basis of the mode. Thus, the water suspension can be preferably directed to different channels independently of each other. Further, in the rinsing or washing stages rinsing liquids can be removed from the system through the inlet flow control system 510. In filtration, the pressure from the process or a pump can be used as running power of the filtration. According to one embodiment pump P4 is used, the pump being typically installed in inlet conduit PFI as shown in figures 1a-1c.

In the case of high-consistency pulps, especially in the filtration of paper industry raw material pulps, the filtration pressure is typically adjusted so as to be between 0.1-5 bar, most preferably 0.5-2,5 bar. Thus, it is possible to produce essentially solids-free filtrate for example 0.006-30 1/h while the magnitude of the pulp flowing through the apparatus is typically many times larger than the amount of filtrate. By using the described apparatus and method the filtration can be continued with these parameters for at least a week without stoppages in the production of filtrate or co0nsiderable changes in the quality of the filtrate.

The filtrate and washing agent flow control system 520 directs the filtrate passing through the filters forward from the filtering apparatus, for example to recovery or an analysis apparatus. In addition, by using the filtrate and washing agent flow control system 520 water and washing agent can be mixed in a suitable proportion to suit the current rinsing or washing stage. The pressure driving the liquids is arranged in the feed conduits WAI and RWI1 by means of pumps P1 and P2, correspondingly.

Generally, the inlet flow control system, outlet flow control system and the filtrate and washing agent flow control system make it possible to use at least one filter for filtering and to simultaneously wash at least one other filter. These systems essentially make it possible to move between filtering and washing stages so that the filtrate flow is continuous. They can also make it possible to use at least two filters for filtering simultaneously.

The outlet flow control system 530 directs the pulp flow out from the apparatus, adjusts the filtering pressure and directs rinsing water to various filtering channels through conduit RWI2, for example by means of pump P3, when needed.

The conduits RWI1, RWI2, RWO1, RWOA RWOB, PFI, PFO, FOA, FOB and WAI and all other pipings and conduits of the apparatus between its components are preferably tubes or hoses. The liquid flows of the flow control systems are controlled by means of branches and valves arranged in the conduits.

In the following, the embodiment of figure 1a is described in more detail. Therein the filtering pressure can be adjusted by means of a pressure adjustment valve 115 preferably located in the outlet conduit PFO. The filtering pressure can be measured by means of meter or sensor 272 being typically in operational connection with the pressure adjustment filter 115, typically through control logic 150.

The inlet valves 101 and 102 connected to the filtrate channels A and B, the outlet valves 112 and 114 as well as filtrate valves 19, correspondingly 17, are used for choosing which of the filters is used for producing the filtrate, i.e. whether the pulp is directed through channel A or B. The pulp can alternatively be simultaneously directed into both channels A and B (parallel operation), whereby all valves 101, 102, 112, 114, 109 and 107 are open.

The filtrate is directed out through the filtrate valve 109 or 107 based on which of the filters is being used. The filtrate conduits FOA and FOB can be connected to each other after the filtrate valves so that the filtrate is directed from both channels to the same analysis apparatus or alternatively the filtrate tubes can direct the filtrate to one tank which is connected to the analysis apparatus. This makes it possible to continuously take samples with one analysis apparatus. On the other hand, the filtrate can be directed from both channels to different tanks or analysis apparatuses that can follow various parameters describing the status of the process. Having flowed through the flow channels the unfiltered pulp is usually directed back to the process via valves 112 and 114 depending on which filter is being used. During filtration the washing valves 110, 103, 111 and 105 or 108, 104, 113 and 106 connected to the channel used in the filtration are closed, correspondingly.

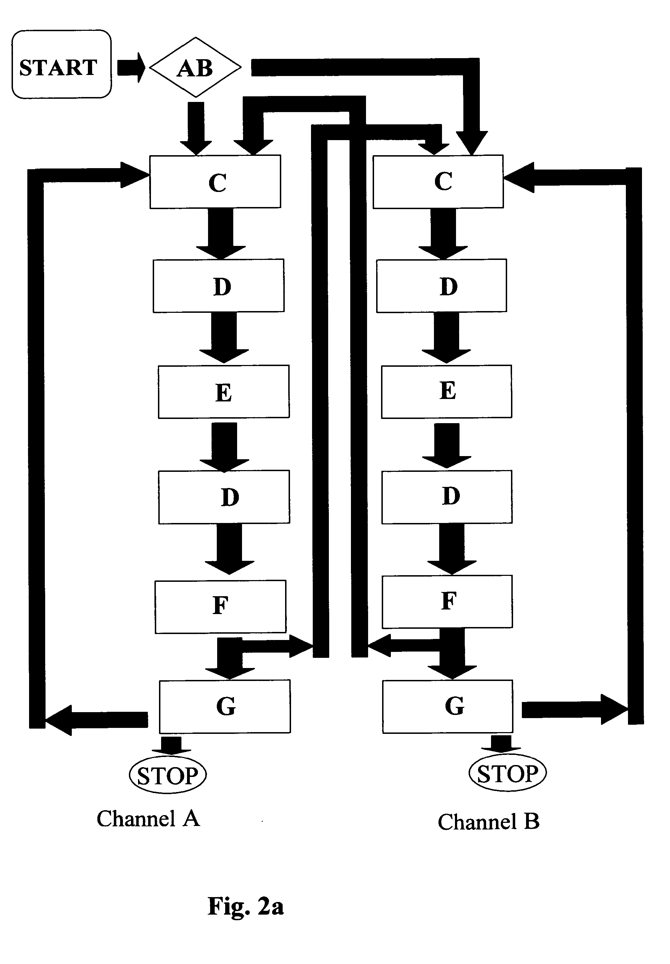

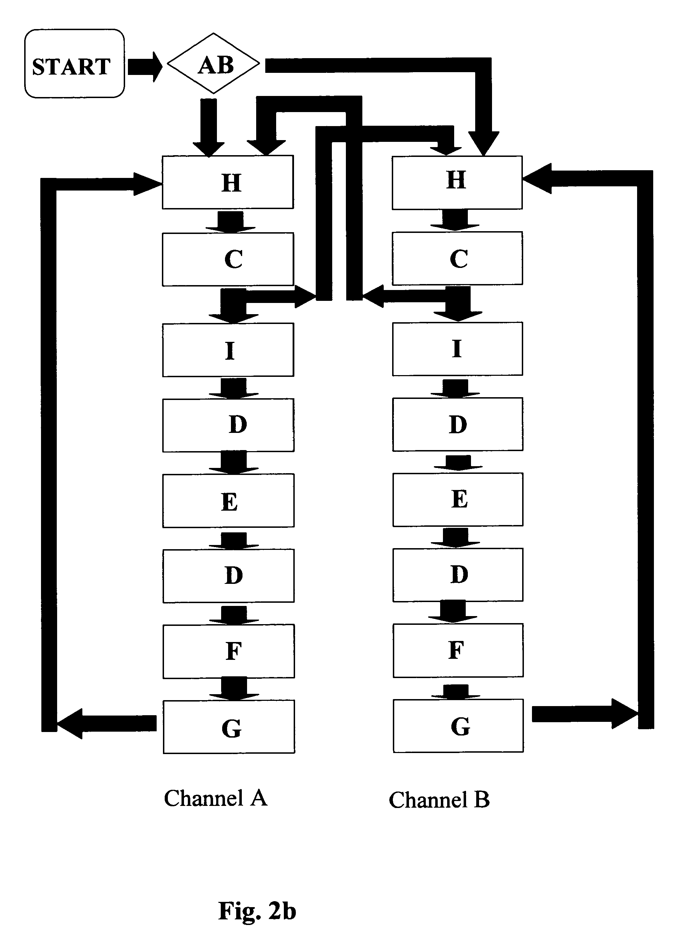

Regenerating the filters, i.e. removing the solids trapped therein by washing can be carried out in various stages. The washing liquid can be fed into the filter and brought away from the filter either through flow channels or filtrate channels. When feeding into the filtrate channels the washing liquid is preferably either water or a solution of acid or base, such as sodium hydroxide solution, and this washing stage is called back flow wash, because the flow of the washing liquid is preferably essentially countercurrent with the flows of process solutions during the filtration. When fed into the filtration channels, the washing liquid is preferably water and thus this phase is called rinsing. In closer examination, the washing can preferably be divided into four sequences: water rinsing, rinsing the pores, back flow washing with water and back flow washing with washing agent, such as In the following disclosure we will shortly describe these stages, but the exemplary program schematics and the valve and pump sequences according to the schematics are shown in figures 2a and 2b and in the following sequence tables.

The washing liquids are preferably introduced into both filtering channels with the same washing pumps. In a preferred embodiment of the invention there are three washing pumps, i.e. two water pumps P2 and P3 and one washing agent pump P1. The intake of the water pumps P2 and P3 is preferably connected to the water line or water tank of the building. The intake of the washing agent pump P1 is preferably in the washing agent tank, such as an acid or base tank, for example in a sodium hydroxide tank. The flow of washing liquids in the filtering channels is controlled by means of shut-off valves, the valves being most probably remote controlled so that they can be attached to an automatic control system. The valves can be, for example, electrically, pneumatically or hydraulically operated.

Neither is the alternative that both filtering channels comprise their own washing liquid pumps (6 pieces totalll told) is not excluded, but by means of using just three pumps and a number of valves considerable economical savings are achieved. Separate washing agent pumps can also be used, if the filtering channels are provided with different filters that are being used for producing filtrate to two different analysis apparatuses, as has been described above, whereby it may be preferable to wash them with various washing agent solutions. Even in this case the feed of two different washing solutions can be carried out by means of a T connector located at the inlet conduit of the washing agent pump P 1 or other branch means and remote-controlled valves located in the formed branches. In case filters with different pore sizes are used in filtration channels, it is preferred to be able to change the filtration pressure accordingly. This can be achieved, for example, by means of separate throttle valves located in the channels or by means of one throttle adjustable according to the filtering stages. Otherwise there is the risk that one filter does not produce filtrate or it produces only a small amount of filtrate.

During water rinsing water is fed simultaneously into the filtrate and flow channels for rinsing them. The flow of the water is preferably produced by pumps P2 and P3, correspondingly. Thus, when rinsing the channel A, valves 103, 105, 110 and 111 are open and when rinsing the channel B the valves 104, 106, 108 and 113 are open. In case the feed pressures of the filtrate and flow channels are essentially the same, essentially no water flows through the pores, whereby the water fed into the flow channels flows through flow channels and is discharged through valves 103 and 104 and the water directed to filtrate channels flows through the filtrate channels and is discharged through valves 105 and 106. In case the feed pressures are different, water is transferred through the pores as well.

During the rinsing of the pores only the pump P3 is running and water is fed into the flow channels only through valves 111 and 113. The corresponding outlet valves 103 and 104 of the flow channels are, however, closed and the outlet valves 105 and 106 of the filtrate channels are open, whereby the rinsing water flows totally through the pores of the filter in the filtration direction and causes the desired rinsing effect. The valves 107, 108, 109 and 110 must then be closed for preventing flow of rinsing water into the filtrate tank, analysis apparatus or pumps P1 and P2.

The back flow washing by means of water or acid solution is effected using the pressure created by pump P2 or P1 as the valves 103 and 110 being in connection with the channel A are open or correspondingly as the valves 104 and 108 being in connection with the channel B are open. Thereby water or acid solution flows from the filtrate channels through the pores against the direction of the filtering into the flow channels and discharges the pulp particles transferred into the pores through valve 103 or 104.

In the parallel operation of channels A and B the valves 101, 102, 109, 107, 212 and 214 are open. When the change from using one filter to using parallel filters is made, the pressure in the filters is halved, in case the adjustment of the throttle 115 is not changed. Thus, the production rate of the filtrate is not essentially changed, even though both filters filter simultaneously. Then when the channel previously in filtering stage is directed into washing stage, the pressure will again rise in the new channel. The parallel use can thus guarantee a continuous and delayless production of filtrate during transfer phases as well. Thus, the yield rate of the filtrate changes preferably less than 20%, typically less than 10%, even less than 5%, when the filtration is changed from one channel to another. The filtrate produced by means of the apparatus can also be kept very constant in quality over a number of filtering cycles. A constant quality filtrate means filtrate that one ideal, non-clogging crossflow filter would give with the same filtering parameters and pulp mass flow. Preferably the parallel use phase is so long that a just cleaned, and thus either empty or full of water, filtering channel fills with pulp and starts to produce constant quality filtrate.

Figure 1b illustrates a variation of the apparatus of figure 1a. There, the inlet and outlet flow control systems are similar to those described above in connection with figure 1a. The reference number 201 of figure 1b corresponds to the reference number 101 in figure 1a, reference number 202 to reference number 102 and so on. However, second, channel-specific rinsing water outlet conduits and valves RWOA2 and 219 and RWOB2 and 220, correspondingly, have been added to the filtrate and washing agent flow control system. The advantage of this embodiment is that in the washing stage the pores, filtration channels and filtration transfer conduits can be rinsed concurrently as well. Further, the feed system of water and washing agent has been modified by adding two feed valves thereto, whereby the water and washing agent are mixed only after valves 216, 217, 218 and 221 separately for each channel. This solution makes it possible to introduce washing agents more flexibly separately for each channel. When needed, the second channel can, for example, be rinsed with clean water and the other can be simultaneously washed with washing agent.

Figure 1c illustrates a system further differing from those shown in figures 1a and 1b, the system comprising modified inlet and outlet flow control systems:
- Another inlet conduit, inlet valves 381 and 383 as well as an intermediate valve 382 for inlet conduits have been added on the inlet side. The second inlet conduit can also comprise a feed pump. This embodiment makes it possible to feed pulp into the apparatus from two different sources, but also the above-described use of one source. The feed can be simultaneous into both channels (valves 381 and 383 open, 382 closed) or alternating between each channel (valve 381 or 383 open, 382 closed). This inlet solution can be used, for example, for accomplishing a large variety of filtering cycles for a number of various purposes.
- On the outlet side, one common throttle valve (115 and 215 in figures 1a and 1b) is replaced by two channel-specific throttle valves 315A and 315B. Both channels can also comprise dedicated pressure sensors 372A and 372B. Thus, dedicated filtering pressures can be adjusted for both channels, especially when using different feeds.

In all of the above-mentioned embodiments the filters are preferably arranged in filter cassettes of one, two or more filters, the cassettes being easily interchangeable and having connectors or conduits for connecting them between the different partial systems of the apparatus. For increasing the efficiency of the washes, ultrasound generators and/or ultrasound sensors can be installed near the filters, preferably on the side of the filter cassettes, for increasing the efficiency of the washes. Such apparatuses are manufactured in Finland by, for example, Finnsonic Oy.

The pumps P1, P2 and P3 are preferably hose pumps, centrifugal pumps or mono pumps or other suitable pumps. Preferably the pumps P1 and P2 are hose pumps, P3 a centrifugal pump and pulp feed pump P4 a mono pump.

Preferably the apparatus also comprises a control system comprising a control means 150, 250, 350 for causing a desired filtering cycle, e.g. such as shown in figures 2a and 2b and the co-operation of valves and pumps as shown in tables 1 and 2 as well as handle the sequence timings, i.e. switching them on and off. The control means 150, 250, 350 comprises, for example, a computer and an adjustment means. A number of different filtering and washing sequences as well as their timings for each filtering channel can be programmed into the control means. The adjustment means receives timing commands for valves and pumps from the computer and transfers the necessary control commands or drive voltages to pumps and valves via transfer means. In the case of pumps the transfer means preferably comprise electric wires, but in the case of valves hoses or tubes of pressurized air or hydraulic hoses or tubes are also possible, depending on the type of the valve.

The control system can also comprise means for monitoring the status of the filtering process. These means can comprise, for example, pressure and flow sensors, liquid level sensors, viscosity sensors and cameras. The control system can additionally receive data about the quality of the filtrate from the analysis apparatus and, when necessary, adjust e.g. filtering pressure or the durations of filtering and washing sequences. The control system can be made to operate fully automatically, semi-automatically or manually. It can also be a so-called suggesting system, whereby the operator must accept the control commands or at least some of them before they are executed. In such a situation the system can send the operator, for example, a visual or audible signal.

As has been described in the above, the filtering and washing sequences can be set to operate automatically in a certain order and at certain times by the control system. The washing sequence preferably comprises a back flow wash with sodium hydroxide or some other acid or base solution suitable for ceramic filters as well as multiple rinsing with water, as has been disclosed in the above. In the above-mentioned primary embodiment the filtering and washing sequences alternate between the filters so that one of filters is constantly filtering. Just before one filter goes into washing stage the other starts filtering. This guarantees a continuous flow of filtrate in outlets FOA and FOB. Alternatively both filters can be used singly or they can both be turned to filtering or washing stage simultaneously.

A typical wash according to the disclosed method is carried out according to the program diagram shown in figures 2a or 2b. In the figure, the letters C - I refer to different filtering and washing sequences, whereby
C means a normal filtering stage (duration of, e.g. 1- 2 h),
D means water rinse (e.g. 30 s).
E means back flow wash with an acid solution (e.g. 120 s),
F means back flow wash water (e.g. 120 s),
G means rinsing the pores with water (e.g. 30 s),
H means feeding washing water into the channel (flow channel) (e.g. 30 s), and
I means a parallel filtering state (e.g. 60 s).

During the choosing stage AB the operator must decide whether to use channels A and B alternatingly, separately or simultaneously. In case the operator interrupts the filtering or washing, the system will preferably execute the washing sequences of the current phase (typically over step G), and stops to wait for a start command from the operator. This avoids standing the filters in an unwashed state and thus a clogging caused by the stoppage.

Typically, the total duration (steps D, E, F and G) of a washing stage guaranteeing a sufficient washing result is in duration a fraction of the duration of the filtering stage, but at the most the duration of the filtering stage, such as 1-10 minutes, typically 4-6 minutes. The various stages of the method can be timed in advance or they can be controlled by following the state of the process. The filtering stage can be ended, for example, when the flow resistance of the filtering material has exceeded a certain limit, e.g. at least 20 % of the beginning of the filtering stage, whereby the water suspension to be filtered is directed into the regenerated filter.

The valve-specific sequence diagram of figure 2a is shown in table 1 and the valve-specific sequence diagram of figure 2b is shown in table 2. In the case of table 1 an apparatus of figure 1a is used as the example and in the case of table 2 an apparatus according figure 1b is used. It will be obvious to one skilled in the art that on the basis of the above description all shown apparatuses, but also apparatuses of other kind that haven't been described here in detail, can be used carrying out the shown sequences as well as many other preferred sequences within the basic principle disclosed in this document. It will be obvious to one skilled in the art that e.g. the operation times and order of the sequences can vary considerably from the above within the basic idea of the invention in an example suitable for treating paper pulp, for example.

Preferably the ceramic crossflow filters are manufactured essentially of aluminum oxide, a material that has been found to be suitable specially for the filtering of high-consistency pulp. Usually the aluminum oxide filters contain considerable amounts, such as 1-20 %, of other compounds, such as silicon dioxide for ease of sintering. The advantages of aluminum oxide are its availability, price, chemical stability and modifiable pore size. Other possible filter materials are, among others, silicon carbide, silicon nitride and aluminum nitride as well as other ceramic filter materials. Typically the length of one filter is 10-150 cm, preferably 25-80 cm, the diameter is 10-100 mm, preferably 25-42 mm, pore size 0.01-25 µm, preferably 0.05-5 µm and the number of flow channels is 1-100, preferably 1-19. Additionally, in case the apparatus is used for simultaneously producing filtrate for measurement apparatuses monitoring different parameters, the channels can be provided with different filters.

The filters can also be of other material or they can be coated with a suitable plastic inert material for reducing accumulation of dirt. Ceramic filters cartridges are typically placed in a shell restricting the running of flows into the desired conduits. Preferably the cartridges are changeable.

Typically the filter apparatus consists of two (or more) independently operating filter units (the filter cartridges with their shells), the conduits leading thereto and therefrom being connected to each other by valves and hoses or tubes. The filter units operate in any position, because the pulp and rinsing water flowing through the filter prevent accumulation of gas in the filter.

According to a preferable embodiment the filters are positioned parallel in a vertical position, whereby the apparatus can be made to have a small footprint. Additionally, the filter cassettes located in a vertical position can be easily changed via the side of the apparatus. The main flow direction of the pulp can be either downwards or upwards. The apparatus can be manufactured on a transport carriage or a transport trellis having, for example, wheels, whereby it can be easily transported.

**Table 1. Sequence diagram of a back flow washer according to one embodiment**

| **Valve** | **Filtering** | **NaOH back wash** | **Water back wash** | **Water rinse** | **Pore rinse** | **Wash water out** | **Filtering** | **NaOH back wash** | **Water back wash** | **Water rinse** | **Pore rinse** | **Wash water out** |
|---|---|---|---|---|---|---|---|---|---|---|---|---|
| | **B** | **B** | **B** | **B** | **B** | **B** | **A** | **A** | **A** | **A** | **A** | **A** |
| **101** | **-** | **-** | **-** | **-** | **-** | **-** | **X** | **-** | **-** | **-** | **-** | **X** |
| **102** | **X** | **-** | **-** | | **-** | **X** | **-** | **-** | **-** | **-** | **-** | **-** |
| **103** | **-** | **-** | **-** | **-** | **-** | **-** | **-** | **X** | **X** | **X** | **-** | **-** |
| **104** | **-** | **X** | **X** | **X** | **-** | **-** | **-** | **-** | **-** | **-** | **-** | **-** |
| **105** | **-** | **-** | **-** | **-** | **-** | **-** | **-** | **-** | **-** | **X** | **X** | **-** |
| **106** | **-** | **-** | **-** | **X** | **X** | **-** | **-** | **-** | **-** | **-** | **-** | **-** |
| **107** | **X** | **-** | **-** | **-** | **-** | **-** | **-** | **-** | **-** | **-** | **-** | **-** |
| **108** | **-** | **X** | **X** | **X** | **-** | **-** | **-** | **-** | **-** | **-** | **-** | **-** |
| **109** | **-** | **-** | **-** | **-** | **-** | **-** | **X** | **-** | **-** | **-** | **-** | **-** |
| **110** | **-** | **-** | **-** | **-** | **-** | **-** | **-** | **X** | **X** | **X** | **-** | **-** |
| **111** | **-** | **-** | **-** | **-** | **-** | **-** | **-** | **-** | **-** | **X** | **X** | **-** |
| **112** | **-** | **-** | **-** | **-** | **-** | **-** | **X** | **-** | **-** | **-** | **-** | **X** |
| **113** | **-** | **-** | **-** | **X** | **X** | **-** | **-** | **-** | **-** | **-** | **-** | **-** |
| **114** | **X** | **-** | **-** | **-** | **-** | **X** | **-** | **-** | **-** | **-** | **-** | **-** |
| **PUMP** | | | | | | | | | | | | |
| **1** | **-** | **X** | **-** | **-** | **-** | **-** | **-** | **X** | **-** | **-** | **-** | **-** |
| **2** | **-** | **-** | **X** | **X** | **-** | **-** | **-** | **-** | **X** | **X** | **-** | **-** |
| **3** | **-** | **-** | **-** | **X** | **X** | **-** | **-** | **-** | **-** | **X** | **X** | **-** |
| **4** | **X** | **-** | **-** | **-** | **-** | **X** | **X** | **-** | **-** | **-** | **-** | **X** |

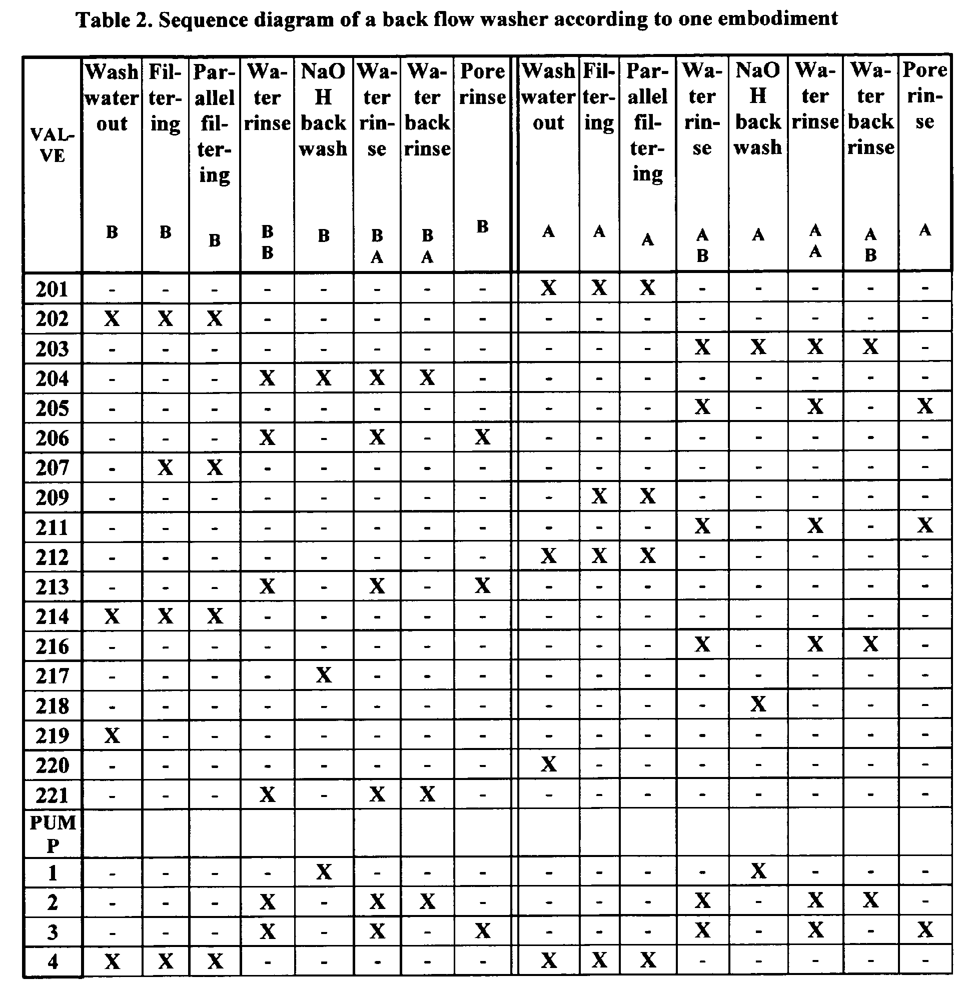

## Claims

1. A method for filtering solids-containing water suspensions in a crossflow filter apparatus, according to which method
- a water suspension is fed into a first ceramic crossflow filter, in which the solid material is separated from the water phase of the water suspension using the ceramic filter material for producing a solids-free filtrate during a filtering stage, and
- the filter is regenerated by removing the solid material accumulated on the ceramic filter material during a washing stage,
**characterized in that**
- at least a part of the water suspension is directed into at least one second ceramic crossflow filter, the second filter being used in parallel with the first filter for filtering the water suspension.

2. A method according to claim 1, **characterized in that** the other filter is brought into washing stage during the filtering stage of the first filter.

3. A method according to claim 2, **characterized in that** before bringing the first filter into washing stage the first and second filters are used simultaneously in filtering stage for a predetermined time for continuously producing filtrate.

4. A method according to any of the preceding claims, **characterized in that** at least one of the filters is always in filtering stage during the filtering.

5. A method according to any of the preceding claims, **characterized in that** the first and second filters are regenerated during the washing stage with a back flow wash, whereby liquid is directed into the ceramic filter material of the filter, the liquid being directed in a direction that is mainly opposite to the direction of the flow direction of the filtrate.

6. A method according to any of the preceding claims, **characterized in that** during the washing stage the first and second filter are rinsed with water.

7. A method according to any of the preceding claims, **characterized in that** the first and second filters are used in parallel so that during the filtering stage of the first filter the other is being regenerated in the washing stage and vice versa.

8. A method according to claim 7, **characterized in that** during the filtering stage the filter is brought into the washing stage when the flow resistance of the filter material has increased to at least 20 % of the beginning of the filtering stage, whereby the water suspension to be filtered is fed into the regenerated filter.

9. A method according to any of the preceding claims, **characterized in that** water suspension containing fibers and possibly filler or pigment is filtered.

10. A method according to claim 9, **characterized in that** a sample of water suspension is filtered, the sample being taken from a raw material flow of a paper making process containing cellulosic pulp, mechanical pulp, reject and/or fillers.

11. A method according to any of the preceding claims, **characterized in that** the number of other filters is 1-10, whereby they are used in parallel with the first filter so that at least one of the other filters is continuously in washing stage or washed and ready to be transferred into filtering phase.

12. A method according to any of the preceding claims, **characterized in that** the filtering is carried out under pressure.

13. A method according to any of the preceding claims, **characterized in that**
- the water suspension is transferred into a filtering channel in the filtering apparatus,
- the water suspension is filtered during the filtering stage by directing it to at least one flow channel of a crossflow filter located in a filtering channel for producing filtrate in a filtrate channel,
- the material, having flowed through the filtrate channel and flow channel is discharged from the filtration apparatus, and
- the filter is cleaned during the washing stage,
- the washing stage comprises a back flow wash, and
- while one channel is in filtering stage, at least one other channel can be brought into washing stage.

14. A method according to any of the preceding claims, **characterized in that** the filter material is aluminum oxide.

15. A method according to any of the preceding claims, **characterized in that**
- the water suspension is fed into the filter with an inlet flow control system, the system channeling the water suspension from the inlet conduit (PFI) to the desired filter,
- the water suspension, subsequent to flowing through the filter, is channeled away from the filter with an outlet flow control system via the outlet conduit (PFO), and
- the washing liquid is fed at least partly via the filtrate and washing liquid control systems through the filtering material so that it is discharged through the inlet flow control system for cleaning solid material from the pores of the filtering material.

16. A method according to any of claims 12-15, **characterized in that** the filtering pressure is created by means of a pump (P4) located in the water suspension inlet tube (PFI) and that the filtering pressure is adjusted by means of an adjustment valve (115, 215, 315A, 315B) connected to the outlet tube for water suspension that has flowed through the filter (PFO).

17. A method according to any of the preceding claims, **characterized in that** the filter washing stage comprises at least one or more of the following stages: washing the filter material countercurrently with water, a back flow wash with a washing liquid, such as NaOH solution, rinsing flow and filtering channels with water and rinsing the pores of the filter material with water.

18. A method according to claim 17, **characterized in that** the washing agent or water is fed during the washing stage into the filter by means of pumps (P1, P2, P3) and directed into the filtering channels and discharged therefrom by means of branches and valves.

19. A method according to any of the preceding claims, **characterized in that** before one filter is brought into washing stage, the other filtering channel can be brought into filtering stage so that the filtrate flow is continuous, whereby the filtrate yield rate fluctuates at most 20 %, preferably less than 10 % and especially less than 5 %.

20. A method according to any of the preceding claims, **characterized in that** at least two filters are simultaneously in filtering stage.

21. A method according to any of the preceding claims, **characterized in that** at least two filters are simultaneously in washing stage.

22. A method according to any of the preceding claims, **characterized in that** it comprises an automatic control (150, 250, 350) of filtering and washing stages.

23. A method according to any of the preceding claims, **characterized in that** the duration of the filtering stage is 1-2 hours and the duration of the washing stage is at most the duration of the filtering stage, preferably 1-10 minutes, typically 4-6 minutes.

24. A method according to any of the preceding claims, **characterized in that** the solid material accumulated on the ceramic filter material during the washing stage is removed at least partly by means of water flowing in the flow channel of the crossflow filter.

25. A filtering apparatus for filtering water suspensions, the apparatus comprising
- a first filtrering channel (A) having a ceramic crossflow filter comprising a porous filtering material into which has been formed a flow channel being in connection with the feed conduit for the water suspension to be filtered for feeding the water suspension into the filter, the crossflow filter further comprising a filtration channel being in connection with ceramic filtering material and through which the water phase having flowed through the ceramic material can be discharged from the filter, and
- washing means connected to the filtering material for removing the solid material accumulated on the filtering material,
**characterized**
- **by** at least one second filtering channel (B) having a second ceramic crossflow filter arranged in parallel with the first crossflow filter for filtering the water suspension.

26. A filtering apparatus according to claim 25, **characterized in that** it comprises an water suspension inlet conduit (PFI) being in operational connection with the first end of each filtering channel (A, B) and an water suspension outlet conduit (PFO) being in operational connection with the second end of each filtering channel (A, B).

27. A filtering apparatus according to claim 25 or 26, **characterized in that** the washing means comprise conduits for feeding water into the flow channels of the filtering channels (A, B) for cleaning the filters by means of flowing water.

28. A filtering apparatus according to any of claims 25-27, **characterized in that** the washing means comprise conduits being connected to the flow channels (A, B) of the filtering channels for feeding washing liquid through the filtering material in opposite direction in relation to the said water stage.

29. A filtering apparatus according to any of claims 25-27, **characterized in that** it comprises
- an inlet flow control system for directing the water suspension into the flow channel of a crossflow filter located in the filtering channel (A, B) for producing filtrate into the filtrate channel of the filtering channel (A, B),
- an outlet flow control system for directing the water suspension out from the apparatus subsequent to the suspension having flowed through each filtering channel, and
- a filtrate and washing agent flow control system for directing filtrate out from the filtrate channels and for introducing washing agent into the filtering channels (A, B) through the filtrate channels,
whereby the filtering part comprising said at least two filtering channels (A, B) connects the inlet flow control system, the outlet flow control system and the filtrate and washing agent flow control system operationally with each other.

30. An apparatus according to any of claims 25-29, **characterized in that** it comprises a pump (P4) located in the water suspension inlet conduit (PFI) for causing the filtering pressure and at least one adjustment valve (115, 215, 315A, 315B) located in the outlet conduit (PFO) for pulp having flowed through for regulating the filtering pressure.

31. A filtering apparatus according to any of claims 25-30, **characterized in that** the washing means for removing the solids accumulated in the filtering material comprise an inlet (RWI2) for water at the end of the flow channels, an outlet (RWO1) for washing liquid at the beginning of the flow channels, inlets (WAI, RWI1) for washing agent and water at the end of filtrate channels, outlets for washing liquid at the beginning of filtrate channels (RWOA, RWOB) and pumps (P1, P2, P3) at the inlet conduits (WAI, RWI1, RWI2) of washing liquids.

32. An apparatus according to any of claims 25-31, **characterized in that** the material of the crossflow filters is aluminum oxide.

33. An apparatus according to any of claims 25-32, **characterized in that** the length of the filters is 10-150 cm, preferably 25-80 cm, their diameter is 10-100 mm, preferably 25-42 mm, the pore size is 0.01-25 µm, preferably 0.05-5 µm and the number of the flow channels is 1-50, preferably 1-19.

34. An apparatus according to any of claims 25-33, **characterized in that** it comprises means for using one filter for filtering and for simultaneously washing the other filter.

35. An apparatus according to any of claims 25-34, **characterized in that** it comprises means for moving between the filtering and washing stages of the filters so that the flow of filtrate is continuous.

36. An apparatus according to any of claims 25-35, **characterized in that** it comprises means for simultaneously using both filters for filtering.

37. An apparatus according to any of claims 25-36, **characterized in that** the inlet flow control system, the outlet flow control system and the filtrate and washing liquid flow control systems make it possible to simultaneously wash at least two filters.

38. An apparatus according to any of claims 25-37, **characterized in that** it comprises a control means (150, 250, 350) for automatically, semiautomatically or manually controlling the pumps and valves of the apparatus.

39. An apparatus according to any of claims 25-38, **characterized in that** it comprises two separately operating filtering channels units being operationally in parallel connection with each other by hoses or tubes, whereby the crossflow filters of each filter unit can be separately changed.
